# EUROPEAN PATENT APPLICATION

(11) **EP 4 765 384 A1**
(43) Date of publication of application: **24.06.2026**
(21) Application number: 25864514.2
(22) Date of filing: 02.09.2025
(51) Int. Cl.: H01M 50/184, H01M 50/105, B29C 65/00, B29C 65/78, B29L 31/00

(54) **POUCH-TYPE BATTERY CELL, DEVICE FOR ROLLING SEALING PORTION OF POUCH-TYPE BATTERY CELL, AND METHOD FOR ROLLING SEALING PORTION USING SAME**

(30) Priority: 07.10.2024 KR 20240135904
(71) Applicant: LG ENERGY SOLUTION, LTD., Seoul 07335 (KR)
(72) Inventor: PARK, Hoon Seo, Daejeon 34122 (KR)
(74) Representative: Goddar, Heinz J.
(86) International application number: PCT/KR2025/013456
(87) International publication number: WO 2026/079672

(57) **Abstract**

Disclosed are a pouch-shaped battery cell including an electrode assembly in which a positive electrode and a negative electrode are stacked with a separator interposed therebetween and a pouch-shaped battery case having an electrode assembly receiving portion configured to receive the electrode assembly, wherein the pouch-shaped battery case includes a first case and a second case, the first case and the second case are coupled to each other such that outer peripheries thereof are aligned with each other to form a sealed portion, and the sealed portion is a roll-shaped sealed portion wound in the shape of a roll, a sealed portion rolling apparatus for the pouch-shaped battery cell, and a sealed portion rolling method using the same.

## Description

### [Technical Field]

This application claims the benefit of priority to Korean Patent Application No. 2024-0135904 filed on October 7, 2024, the disclosure of which is incorporated herein by reference in its entirety.

The present invention relates to a pouch-shaped battery cell, a sealed portion rolling apparatus for the pouch-shaped battery cell, and a sealed portion rolling method using the same. More particularly, the present invention relates to a pouch-shaped battery cell including a roll-shaped sealed portion capable of preventing insulation failure when folding a sealed portion of the pouch-shaped battery cell, a sealed portion rolling apparatus for the pouch-shaped battery cell, and a sealed portion rolling method using the same.

### [Background Art]

There is growing demand for secondary batteries capable of solving the problem of air pollution caused by the use of fossil fuels and storing electrical energy produced from alternative energy sources. Particularly, demand for lithium secondary batteries, which have high energy density and excellent output and cycle characteristics, is growing significantly.

Based on the type of a case, lithium secondary batteries may be classified into a prismatic battery cell using a metal can as a case, a cylindrical battery cell using a metal can as a case, and a pouch-shaped battery cell using a laminate sheet including a resin layer and a metal layer as a battery case.

Thereamong, the pouch-shaped battery cell is widely used due to easy deformation and high energy density thereof.

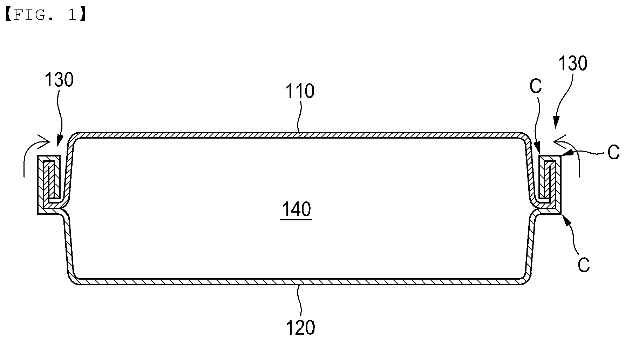

The pouch-shaped battery cell is manufactured by sealing an outer periphery of the case by thermal fusion and folding a sealed portion to reduce the volume thereof. In this regard, FIG. 1 is a vertical sectional view of a conventional pouch-shaped battery cell.

Referring to FIG. 1, in the pouch-shaped battery cell, outer peripheries of a first case 110 and a second case 120 are thermally fused to form a sealed portion 130, and the sealed portion 130 is folded toward an electrode assembly receiving portion 140 of the pouch-shaped battery cell.

At this time, if the sealed portion 130 is bent and folded at a right angle, a corner portion C becomes angular, and insulation failure may occur at the corner portion C during the right-angle folding process.

In this regard, Patent Document 1 discloses a battery cell including a pouch case, which has a receiving portion configured to receive an electrode assembly and a sealed portion configured to seal at least a part of the periphery of the receiving portion, and a winding rod disposed on the sealed portion, wherein the sealed portion of the pouch case is wound around the winding rod into a roll shape.

In the battery cell of Patent Document 1, the sealed portion is wound into a roll shape in the state in which the winding rod is disposed on the sealed portion, and the winding rod functions as a heat transfer path without being removed even after the sealed portion is wound into a roll shape. The addition of the winding rod unnecessarily increases the weight of the battery cell.

Patent Document 2 discloses a pouch-shaped secondary battery in which an electrode assembly is received in a pouch case, wherein the sealed portion is wound into a roll shape. However, in Patent Document 2, a sealed portion of an upper pouch and a sealed portion of a lower pouch have different lengths, and a configuration in which the sealed portion is wound in a roll shape when the sealed portion of the upper pouch and the sealed portion of the lower pouch have the same length and an apparatus for forming the sealed portion are not suggested.

Therefore, there is a need for an apparatus and method capable of bending a sealed portion of a pouch-shaped battery cell to minimize the volume of the pouch-shaped battery cell and stably forming a roll-shaped sealed portion to prevent insulation failure at the sealed portion.

### (Prior Art Documents)

(Patent Document 1) Korean Patent Application Publication No. 2024-0030696 (2024.03.07)
(Patent Document 1) Korean Patent Application Publication No. 2012-0008297 (2012.01.30)

### [Disclosure]

### [Technical Problem]

The present invention has been made in view of the above problems, and it is an object of the present invention to provide a pouch-shaped battery cell having a sealed portion wound in a roll shape without provision of a separate additional component to the sealed portion of the pouch-shaped battery cell to prevent insulation failure, a sealed portion rolling apparatus for the pouch-shaped battery cell, and a sealed portion rolling method using the same.

### [Technical Solution]

A pouch-shaped battery cell according to the present invention to accomplish the above object includes an electrode assembly in which a positive electrode and a negative electrode are stacked with a separator interposed therebetween and a pouch-shaped battery case having an electrode assembly receiving portion configured to receive the electrode assembly, wherein the pouch-shaped battery case includes a first case and a second case, the first case and the second case are coupled to each other such that outer peripheries thereof are aligned with each other to form a sealed portion, and the sealed portion is a roll-shaped sealed portion wound in the shape of a roll.

In the pouch-shaped battery cell according to the present invention, the roll-shaped sealed portion may be formed as a result of the sealed portion being wound at least once.

A sealed portion rolling apparatus for the pouch-shaped battery cell according to the present invention includes a gripping unit configured to grip the sealed portion of the pouch-shaped battery case, a rotary shaft coupled to one end of the gripping unit, and a driving unit configured to rotate the rotary shaft, wherein the gripping unit includes a first gripping unit and a second gripping unit including first surfaces facing each other, and the first gripping unit and the second gripping unit are spaced apart from each other in parallel.

In the sealed portion rolling apparatus for the pouch-shaped battery cell according to the present invention, the first surface of the first gripping unit and the first surface of the second gripping unit may be flat surfaces, and the remaining surfaces other than the first surfaces may be curved surfaces.

In the sealed portion rolling apparatus for the pouch-shaped battery cell according to the present invention, the first surface of the first gripping unit and the first surface of the second gripping unit may be spaced apart from each other in parallel.

In the sealed portion rolling apparatus for the pouch-shaped battery cell according to the present invention, first ends of the first gripping unit and the second gripping unit may be connected to each other, and the rotary shaft may be coupled to the first ends.

In the sealed portion rolling apparatus for the pouch-shaped battery cell according to the present invention, the length of each of the first gripping unit and the second gripping unit may be greater than the length of the sealed portion of the pouch-shaped battery case.

In the sealed portion rolling apparatus for the pouch-shaped battery cell according to the present invention, the sealed portion rolling apparatus may include a first sealed portion rolling apparatus and a second sealed portion rolling apparatus, and a second end of the first sealed portion rolling apparatus, which is opposite a first end thereof, and a second end of the second sealed portion rolling apparatus, which is opposite a first end thereof, may be coupled to each other.

In the sealed portion rolling apparatus for the pouch-shaped battery cell according to the present invention, a first protrusion and a first recess may be formed at the second end of the first sealed portion rolling apparatus, a second protrusion and a second recess may be formed at the second end of the second sealed portion rolling apparatus, the first protrusion may be inserted into the second recess, and the second protrusion may be inserted into the first recess.

The sealed portion rolling apparatus for the pouch-shaped battery cell according to the present invention may further include a distance adjustment unit formed at the first ends of the first gripping unit and the second gripping unit, wherein the distance adjustment unit may be operated to move the second gripping unit relative to the first gripping unit, and the second gripping unit may be moved in the state in which the first surface thereof is parallel to the first surface of the first gripping unit.

A sealed portion rolling method using the sealed portion rolling apparatus for the pouch-shaped battery cell according to the present invention includes a first step of coupling the second end of the first sealed portion rolling apparatus and the second end of the second sealed portion rolling apparatus to each other, a second step of disposing a sealed portion of a pouch-shaped battery cell between the first sealing apparatus rolling device and the second sealing apparatus rolling device of the first step, a third step of rotating a first rotary shaft of the first sealing apparatus and a second rotary shaft of the second sealing apparatus to form a roll-shaped sealed portion, and a fourth step of separating the first sealed portion rolling apparatus and the second sealed portion rolling apparatus from each other and removing the same from the roll-shaped sealed portion.

The sealed portion rolling method according to the present invention may include a first step of operating the distance adjustment unit to increase the distance between the first gripping unit and the second gripping unit, a second step of disposing a sealed portion of a pouch-shaped battery cell between the first gripping unit and the second gripping unit, a third step of reducing the distance between the first gripping unit and the second gripping unit to bring the same into tight contact with the sealed portion, a fourth step of rotating the rotary shaft of the sealed portion rolling apparatus to form a roll-shaped sealed portion, and a fifth step of increasing the distance between the first gripping unit and the second gripping unit and removing the same from the roll-shaped sealed portion.

In addition, the present invention may provide various combinations of the above solving means.

### [Advantageous Effects]

As is apparent from the above description, a pouch-shaped battery cell according to the present invention has a sealed portion folded into a roll shape, whereby it is possible to prevent insulation failure when the sealed portion is folded.

In addition, it is possible to form a roll-shaped sealed portion without angular portions capable of stably holding the sealed portion.

### [Description of Drawings]

FIG. 1 is a vertical sectional view of a conventional pouch-shaped battery cell.
FIG. 2 is a perspective view of a pouch-shaped battery cell according to the present invention.
FIG. 3 is a perspective view showing the state in which a sealed portion rolling apparatus according to a first embodiment is added to a sealed portion of the pouch-shaped battery cell according to the present invention.
FIG. 4 is a partial enlarged view of FIG. 3.
FIG. 5 is a perspective view of a sealed portion rolling apparatus according to a second embodiment.
FIG. 6 is a partial enlarged sectional view taken along line A-A' of FIG. 5.
FIG. 7 is a partial enlarged perspective view of a sealed portion rolling apparatus according to a third embodiment.
FIG. 8 is a view showing a sealed portion rolling method using the sealed portion rolling apparatus according to the second embodiment.
FIG. 9 is a view showing a sealed portion rolling method using the sealed portion rolling apparatus according to the third embodiment.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

The same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

A description to embody elements through limitation or addition may be applied to all inventions, unless particularly restricted, and does not limit a specific invention.

In the description of the invention and the claims of the present application, singular forms are intended to include plural forms unless mentioned otherwise.

In the description of the invention and the claims of the present application, "or" includes "and" unless mentioned otherwise. Therefore, "including A or B" means three cases, namely, the case including A, the case including B, and the case including A and B.

Embodiments of the present invention will be described in more detail with reference to the drawings.

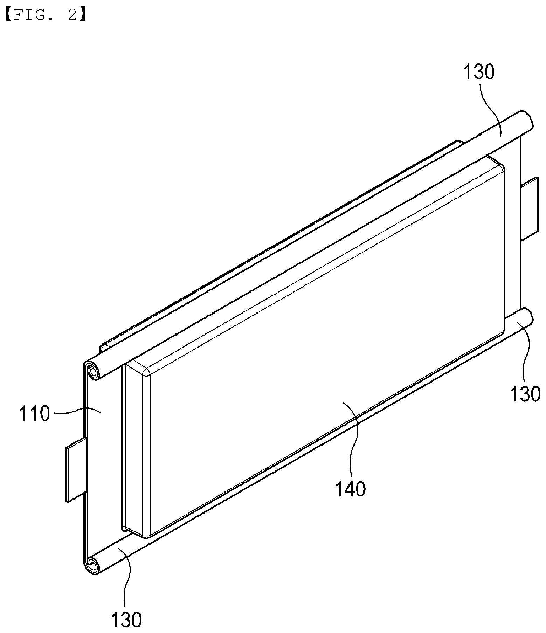

FIG. 2 is a perspective view of a pouch-shaped battery cell according to the present invention.

Referring to FIG. 2, the pouch-shaped battery cell according to the present invention includes an electrode assembly in which a positive electrode and a negative electrode are stacked with a separator interposed therebetween and a pouch-shaped battery case having an electrode assembly receiving portion 140 configured to receive the electrode assembly, wherein the pouch-shaped battery case includes a first case 110 and a second case 120. The first case 110 and the second case 120 are coupled to each other such that outer peripheries thereof are aligned with each other to form a sealed portion 130, wherein the sealed portion 130 is a roll-shaped sealed portion wound in the shape of a roll.

The roll-shaped sealed portion is formed as the result of the sealed portion 130 being wound at least once. Therefore, a cut surface of a metal layer constituting the pouch-shaped battery case may not be exposed to the outside, thereby enhancing insulation.

In addition, since the sealed portion 130 is wound adjacent to the electrode assembly receiving portion 140, the width of the pouch-shaped battery cell may be minimized, whereby the overall volume of the pouch-shaped battery cell may be reduced, and therefore it is possible to provide a pouch-shaped battery cell with high energy density.

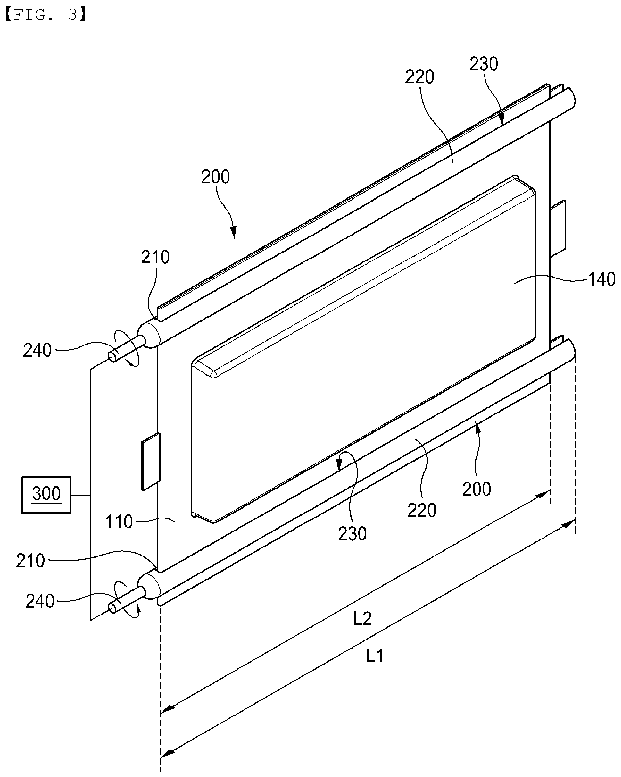

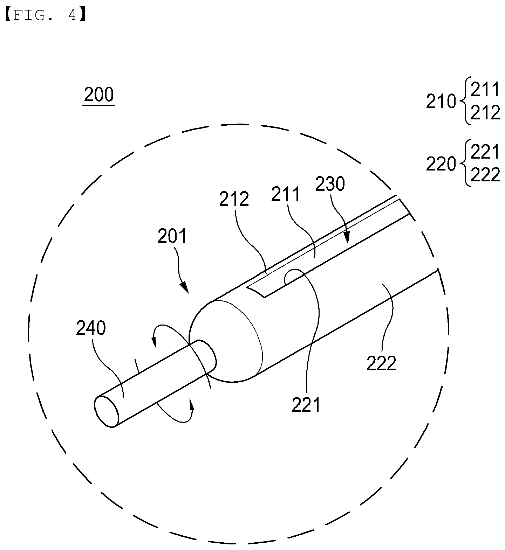

FIG. 3 is a perspective view showing the state in which a sealed portion rolling apparatus according to a first embodiment is added to a sealed portion of the pouch-shaped battery cell according to the present invention, and FIG. 4 is a partial enlarged view of FIG. 3.

Referring to FIGs. 3 and 4, the sealed portion rolling apparatus 200 according to the first embodiment includes a gripping unit including a first gripping unit 210 and a second gripping unit 220 configured to grip the sealed portion of the pouch-shaped battery case, a rotary shaft 240 coupled to one end of the gripping unit, and a driving unit 300 configured to rotate the rotary shaft 240.

A first surface 211 of the first gripping unit 210 and a first surface 221 of the second gripping unit 220 are disposed so as to face each other, the first surface 211 of the first gripping unit 210 and the second surface 221 of the second gripping unit 220 are spaced apart from each other in parallel, and a slit 230 having a certain width is formed between the first surface 211 and the second surface 221. The width of the slit 230 is greater than the thickness of the sealed portion 130 of the pouch-shaped battery cell such that the sealed portion 130 can be easily inserted into the slit 230. However, if the width of the slit 230 is much greater than the thickness of the sealed portion 130, it may be difficult to stably fix the sealed portion 130 when the sealed portion 130 is wound to form a roll-shaped sealed portion, and therefore the width of the slit may be 100% to 110% of the thickness of the sealed portion 130.

The first surface 211 of the first gripping unit 210 and the first surface 221 of the second gripping unit 220 are flat surfaces disposed parallel to each other, and the remaining outer surfaces of the first gripping unit 210 and the second gripping unit 220, excluding the first surfaces 211 and 221, are curved surfaces. Therefore, the first gripping unit 210 includes a first flat surface 211 and a first curved surface 212, and the second gripping unit 220 includes a first flat surface 221 and a second curved surface 222.

Therefore, when the sealed portion 130 is inserted between the first gripping unit 210 and the second gripping unit 220 and the sealed portion rolling apparatus 200 is rotated, the sealed portion 130 is wound around the first curved surface 212 and the second curved surface 222 in tight contact therewith, whereby a sealed portion wound in the shape of a roll may be formed.

The first gripping unit 210 and the second gripping unit 220 are connected to each other at a first end 201, and the rotary shaft 240 is coupled to the first end 201. The driving unit 300 configured to rotate the rotary shaft 240 may be coupled to the rotary shaft 240, wherein the rotary shaft 240 is rotated by the rotational force of the driving unit 300 in a direction indicated by arrows, whereby the sealed portion 130 may be wound in a direction toward the electrode assembly receiving portion 140.

In order to change the entirety of the sealed portion 130 into a roll-shaped sealed portion using the sealed portion rolling apparatus 200, the length L1 of each of the first gripping unit 210 and the second gripping unit 220 may be greater than the length L2 of the sealed portion 130 of the pouch-shaped battery case.

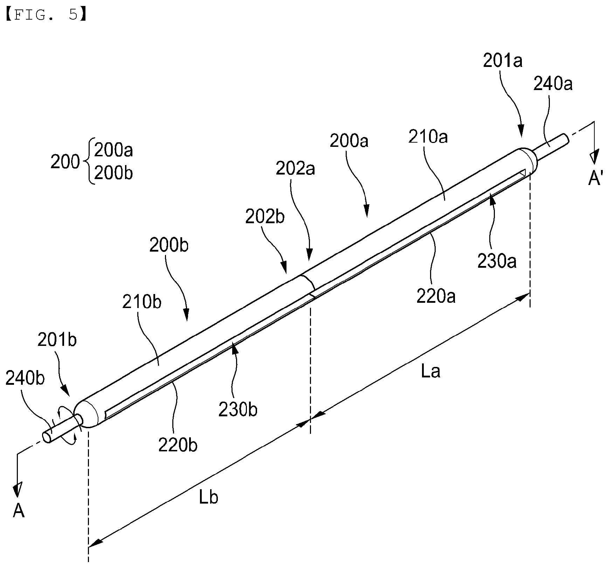

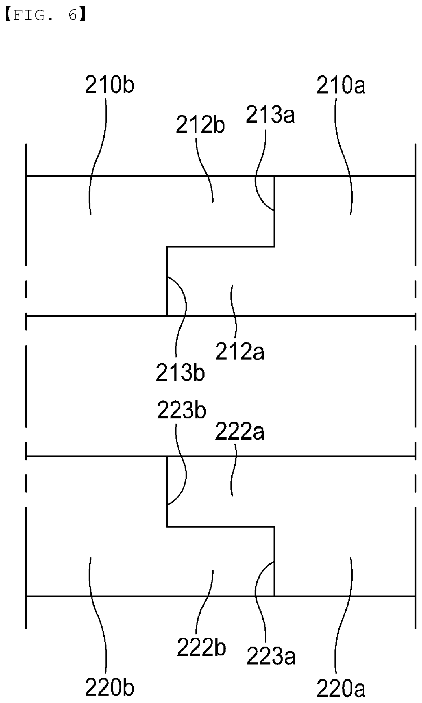

FIG. 5 is a perspective view of a sealed portion rolling apparatus according to a second embodiment, and FIG. 6 is a partial enlarged sectional view taken along line A-A' of FIG. 5.

Referring to FIG. 5, the sealed portion rolling apparatus according to the second embodiment is similar to the sealed portion rolling apparatus according to the first embodiment except that the sealed portion rolling apparatus according to the second embodiment is a combined sealed portion rolling apparatus including a first sealed portion rolling apparatus 200a and a second sealed portion rolling apparatus 200b.

The first sealed portion rolling apparatus 200a includes a gripping unit including a first gripping unit 210a and a second gripping unit 220a configured to grip a sealed portion of a pouch-shaped battery case, a first rotary shaft 240a coupled to one end of the gripping unit, and a slit 230a formed between the first gripping unit 210a and the second gripping unit 220a.

The second sealed portion rolling apparatus 200b includes a gripping unit including a first gripping unit 210b and a second gripping unit 220b configured to grip the sealed portion of the pouch-shaped battery case, a second rotary shaft 240b coupled to one end of the gripping unit, and a slit 230b formed between the first gripping unit 210b and the second gripping unit 220b.

A second end 202a of the first sealed portion rolling apparatus 200a, which is opposite a first end 201a thereof, and a second end 202b of the second sealed portion rolling apparatus 200b, which is opposite a first end 201b thereof, are coupled to each other to form an integrated sealed portion rolling apparatus 200.

Specifically, referring to FIGs. 5 and 6, first protrusions 212a and 222a and first recesses 213a and 223a are formed at the second end 202a of the first sealed portion rolling apparatus 200a, second protrusions 212b and 222b and second recesses 213b and 223b are formed at the second end 202 of the second sealed portion rolling apparatus 200b, the first protrusions 212a and 222a are inserted into the second recesses 213b and 223b, respectively, and the second protrusions 212b and 222b are inserted into the first recesses 213a and 223b, respectively.

As such, the first sealed portion rolling apparatus 200a and the second sealed portion rolling apparatus 200b are stably coupled to each other, whereby separation between the first sealed portion rolling apparatus 200a and the second sealed portion rolling apparatus 200b is prevented during a process of winding the sealed portion 130, and therefore it is possible to form a roll-shaped sealed portion having a uniform shape from the entirety of the sealed portion 130.

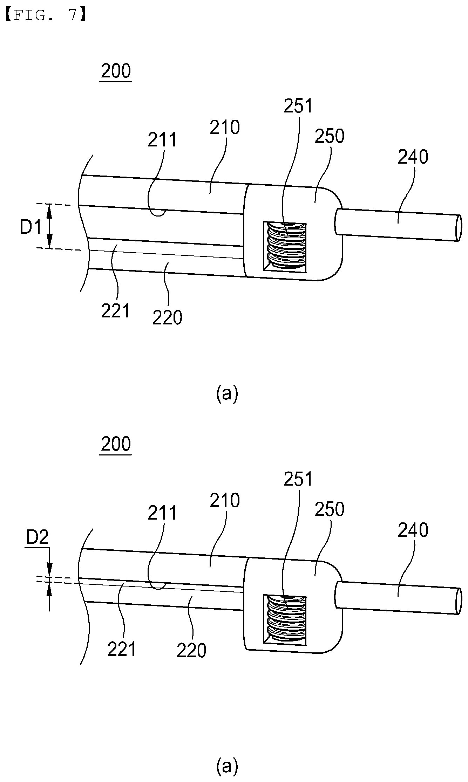

FIG. 7 is a partial enlarged perspective view of a sealed portion rolling apparatus according to a third embodiment.

Referring to FIG. 7, the sealed portion rolling apparatus according to the third embodiment is characterized in that the distance between a first gripping unit 210 and a second gripping unit 220 is adjustable.

Specifically, the first gripping unit 210 and the second gripping unit 220 include a coupling unit 250 connected to a first end 201, and a distance adjustment unit 251 is located in the coupling unit 250.

The distance adjustment unit 251 may, for example, have a structure similar to a distance adjustment structure of a monkey wrench, wherein the distance adjustment unit 251 may be operated to move the second gripping unit 220 relative to the first gripping unit 210.

The second gripping unit 220 may be moved in the state in which a first surface 211 thereof is parallel to a first surface 211 of the first gripping unit 210.

That is, (a) shows the case where the distance D1 between the first gripping unit 210 and the second gripping unit 220 is the maximum, and (b) shows the case where the distance D2 between the first gripping unit 210 and the second gripping unit 220 is less than the distance in (a), wherein D2 may be 0 or greater than 0.

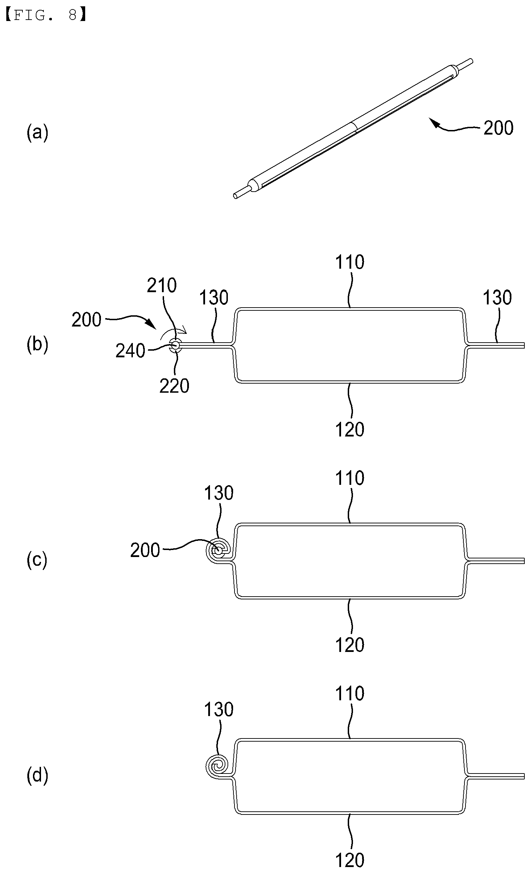

FIG. 8 shows a sealed portion rolling method using the sealed portion rolling apparatus according to the second embodiment.

Referring to FIG. 8, the sealed portion rolling method using the sealed portion rolling apparatus according to the second embodiment includes (a) a first step of coupling the second end of the first sealed portion rolling apparatus 200a of the sealed portion rolling apparatus 200 and the second end of the second sealed portion rolling apparatus 200b to each other, (b) a second step of disposing a sealed portion 130 of a pouch-shaped battery cell between the first sealing apparatus rolling apparatus 200a and the second sealing apparatus rolling apparatus 200b of step (a), a third step of rotating the first rotary shaft 240a of the first sealing apparatus 200a and the second rotary shaft 240b of the second sealing apparatus 200b to form a roll-shaped sealed portion, and (d) a fourth step of separating the first sealed portion rolling apparatus 200a and the second sealed portion rolling apparatus 200b from each other and removing the same from the roll-shaped sealed portion.

That is, in the sealed portion rolling apparatus according to the second embodiment, the sealed portion is rolled through a process of coupling the first sealed portion rolling apparatus 200a and the second sealed portion rolling apparatus 200b, which are provided as a pair, to each other to form a roll-shaped sealed portion, separating the first sealed portion rolling apparatus 200a and the second sealed portion rolling apparatus 200b from each other, and removing the same from the roll-shaped sealed portion.

Outer peripheries of a first case 110 and a second case 120 of the pouch-shaped battery cell are thermally fused to form the sealed portion 130, and the flat sealed portion 130 may be changed into the shape of a roll, as shown in (d), using the sealed portion rolling method described above.

FIG. 8 shows the state where one side sealed portion 130 is changed into a roll-shaped sealed portion; however, the sealed portion 130 located opposite the roll-shaped sealed portion of (d) may also be changed tin a roll-shaped sealed portion through the same process.

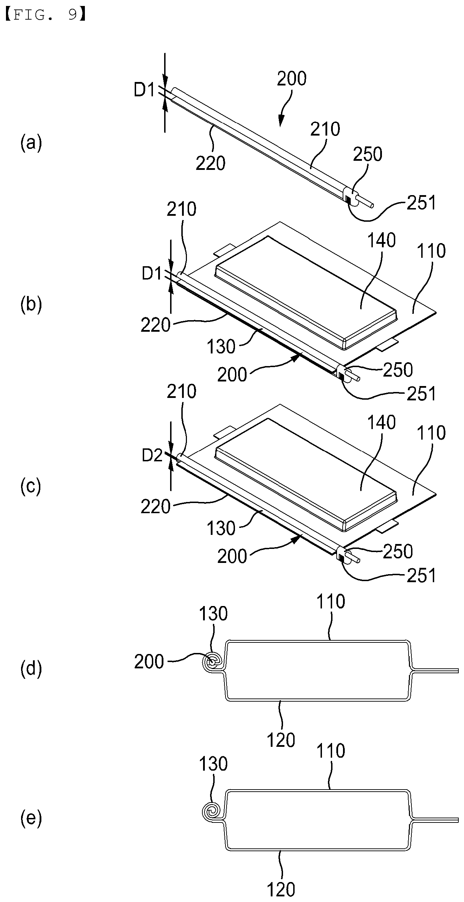

FIG. 9 shows a sealed portion rolling method using the sealed portion rolling apparatus according to the third embodiment.

Referring to FIG. 9, the sealed portion rolling method using the sealed portion rolling apparatus according to the third embodiment includes (a) a first step of operating the distance adjustment unit 251 to increase the distance D1 between the first gripping unit 210 and the second gripping unit 220, (b) a second step of disposing a sealed portion 130 of a pouch-shaped battery cell between the first gripping unit 210 and the second gripping unit 220, (c) a third step of reducing the distance D2 between the first gripping unit 210 and the second gripping unit 220 to bring the same into tight contact with the sealed portion, (d) a fourth step of rotating the rotary shaft of the sealed portion rolling apparatus 200 to form a roll-shaped sealed portion, and (e) a fifth step of increasing the distance between the first gripping unit 210 and the second gripping unit 220 and removing the same from the roll-shaped sealed portion.

That is, in the sealed portion rolling apparatus according to the third embodiment, the distance between the first gripping unit 210 and the second gripping unit 220 may be increased to D1 to grip the sealed portion 130, and the distance may be reduced to D2 such that the first gripping unit 210 and the second gripping unit 220 are in tight contact with the sealed portion 130. A roll-shaped sealed portion may be formed in this state, and the distance between the first gripping unit 210 and the second gripping unit 220 may be increased to remove the sealed portion rolling apparatus 200 from the roll-shaped sealed portion.

Those skilled in the art to which the present invention pertains will appreciate that various applications and modifications are possible within the scope of the present invention based on the above description.

### (Description of Reference Symbols)

110: First case
120: Second case
130: Sealed portion
140: Electrode assembly receiving portion
200: Sealed portion rolling apparatus
200a: First sealed portion rolling apparatus
200b: Second sealed portion rolling apparatus
201, 201a, 201b: First end
202, 202a, 202b: Second end
210, 210a, 210b: First gripping unit
211, 221: First surface
212: First curved surface
212a, 222a: First protrusion
212b, 222b: Second protrusion
213a, 223a: First recess
213b, 223b: Second recess
220, 220a, 220b: Second gripping unit
222: Second curved surface
230, 230a, 230b: Slit
240: Rotary shaft
240a: First rotary shaft
240b: Second rotary shaft
250: Coupling unit
251: Distance adjustment unit
300: Driving unit
C: Corner portion
D1, D2: Distance

## Claims

1. A pouch-shaped battery cell comprising:
an electrode assembly in which a positive electrode and a negative electrode are stacked with a separator interposed therebetween; and
a pouch-shaped battery case having an electrode assembly receiving portion configured to receive the electrode assembly, wherein
the pouch-shaped battery case comprises a first case and a second case,
the first case and the second case are coupled to each other such that outer peripheries thereof are aligned with each other to form a sealed portion, and
the sealed portion is a roll-shaped sealed portion wound in a shape of a roll.

2. The pouch-shaped battery cell according to claim 1, wherein the roll-shaped sealed portion is formed as a result of the sealed portion being wound at least once.

3. A sealed portion rolling apparatus for the pouch-shaped battery cell according to claim 1 or 2, the sealed portion rolling apparatus comprising:
a gripping unit configured to grip the sealed portion of the pouch-shaped battery case;
a rotary shaft coupled to one end of the gripping unit; and
a driving unit configured to rotate the rotary shaft, wherein
the gripping unit comprises a first gripping unit and a second gripping unit comprising first surfaces facing each other, and
the first gripping unit and the second gripping unit are spaced apart from each other in parallel.

4. The sealed portion rolling apparatus according to claim 3, wherein
the first surface of the first gripping unit and the first surface of the second gripping unit are flat surfaces, and
remaining surfaces other than the first surfaces are curved surfaces.

5. The sealed portion rolling apparatus according to claim 4, wherein the first surface of the first gripping unit and the first surface of the second gripping unit are spaced apart from each other in parallel.

6. The sealed portion rolling apparatus according to claim 4, wherein
first ends of the first gripping unit and the second gripping unit are connected to each other, and
the rotary shaft is coupled to the first ends.

7. The sealed portion rolling apparatus according to claim 6, wherein a length of each of the first gripping unit and the second gripping unit is greater than a length of the sealed portion of the pouch-shaped battery case.

8. The sealed portion rolling apparatus according to claim 6, wherein
the sealed portion rolling apparatus comprises a first sealed portion rolling apparatus and a second sealed portion rolling apparatus, and
a second end of the first sealed portion rolling apparatus, which is opposite a first end thereof, and a second end of the second sealed portion rolling apparatus, which is opposite a first end thereof, are coupled to each other.

9. The sealed portion rolling apparatus according to claim 8, wherein
a first protrusion and a first recess are formed at the second end of the first sealed portion rolling apparatus, and a second protrusion and a second recess are formed at the second end of the second sealed portion rolling apparatus, and
the first protrusion is inserted into the second recess, and the second protrusion is inserted into the first recess.

10. The sealed portion rolling apparatus according to claim 6, further comprising:
a distance adjustment unit formed at the first ends of the first gripping unit and the second gripping unit, wherein
the distance adjustment unit is operated to move the second gripping unit relative to the first gripping unit, and
the second gripping unit is moved in a state in which the first surface thereof is parallel to the first surface of the first gripping unit.

11. A sealed portion rolling method using the sealed portion rolling apparatus according to claim 8, the sealed portion rolling method comprising:
a first step of coupling the second end of the first sealed portion rolling apparatus and the second end of the second sealed portion rolling apparatus to each other;
a second step of disposing a sealed portion of a pouch-shaped battery cell between the first sealing apparatus rolling device and the second sealing apparatus rolling device of the first step;
a third step of rotating a first rotary shaft of the first sealing apparatus and a second rotary shaft of the second sealing apparatus to form a roll-shaped sealed portion; and
a fourth step of separating the first sealed portion rolling apparatus and the second sealed portion rolling apparatus from each other and removing the same from the roll-shaped sealed portion.

12. A sealed portion rolling method using the sealed portion rolling apparatus according to claim 10, the sealed portion rolling method comprising:
a first step of operating the distance adjustment unit to increase a distance between the first gripping unit and the second gripping unit;
a second step of disposing a sealed portion of a pouch-shaped battery cell between the first gripping unit and the second gripping unit;
a third step of reducing the distance between the first gripping unit and the second gripping unit to bring the same into tight contact with the sealed portion;
a fourth step of rotating the rotary shaft of the sealed portion rolling apparatus to form a roll-shaped sealed portion; and
a fifth step of increasing the distance between the first gripping unit and the second gripping unit and removing the same from the roll-shaped sealed portion.
